# EUROPEAN PATENT APPLICATION

(11) **EP 4 358 594 A1**
(43) Date of publication of application: **24.04.2024**
(21) Application number: 22824116.2
(22) Date of filing: 09.06.2022
(51) Int. Cl.: H04W 48/16, H04M 1/02

(54) **NETWORK CAMPING-ON METHOD AND APPARATUS**

(30) Priority: 16.06.2021 CN 202110666271
(71) Applicant: Vivo Mobile Communication Co., Ltd., Dongguan, Guangdong 523863 (CN)
(72) Inventor: CHEN, Guangmin, Dongguan, Guangdong 523863 (CN)
(74) Representative: Lavoix
(86) International application number: PCT/CN2022/097832
(87) International publication number: WO 2022/262636

(57) **Abstract**

This application discloses a stationing method and apparatus and belongs to the field of communication technologies. The stationing method includes: sending a measurement report of a measured new radio NR cell to a long-term evolution LTE base station; searching, if redirection information sent by the LTE base station based on the measurement report is received, for a target NR cell corresponding to a cell frequency in the redirection information, and resolving a system message of the target NR cell; and initiating, if tracking area TA information is resolved from the system message of the target NR cell, a registration request on the target NR cell, where the registration request is used for an electronic device to station on the target NR cell.

## Description

### TO RELATED APPLICATIONS

This application claims the priority of Chinese Patent Application No. 202110666271.0 filed in China on June 16, 2021, which is incorporated herein by reference in its entirety.

### TECHNICAL FIELD

This application relates to the field of communication technologies, and specifically, to a stationing method and apparatus.

### BACKGROUND

In the fifth generation mobile communication technology (5th Generation, 5G) communication system, the deployment of a 5G new radio (New Radio, NR) network is gradually transitioning from the non-standalone architecture (Non-Standalone Architecture, NSA) to the standalone architecture (Standalone Architecture, SA). However, at present, an SA/NSA hybrid architecture mode is mainly used.

In the related technologies, when moving between networks of different standards, a user equipment (User Equipment, UE) maintains service continuity mainly through handover or redirection operations. However, in an SA/NSA hybrid architecture scenario, when a UE moves from an SA network coverage area to an NSA network coverage area, the UE may fail to station on a network, which causes the UE to lose a network connection.

### SUMMARY

An objective of embodiments of this application is to provide a stationing method and apparatus, a device, and a storage medium, to resolve a problem in the related art that when a UE moves from an SA network coverage area to an NSA network coverage area, the UE fails to station on a network, which causes the UE to lose a network connection.

According to a first aspect, an embodiment of this application provides a stationing method. The method includes: sending a measurement report of a measured new radio NR cell to a long-term evolution LTE base station; searching, if redirection information sent by the LTE base station based on the measurement report is received, for a target NR cell corresponding to a cell frequency in the redirection information, and resolving a system message of the target NR cell; and initiating, if tracking area TA information is resolved from the system message of the target NR cell, a registration request on the target NR cell, where the registration request is used for an electronic device to station on the target NR cell.

According to a second aspect, an embodiment of this application provides a stationing apparatus. The apparatus includes: a sending module, configured to send a measurement report of a measured NR cell to an LTE base station; a resolution module, configured to search, if redirection information sent by the LTE base station based on the measurement report is received, for a target NR cell corresponding to a cell frequency in the redirection information, and resolve a system message of the target NR cell; and a registration module, configured to initiate, if tracking area TA information is resolved from the system message of the target NR cell, a registration request on the target NR cell, where the registration request is used for an electronic device to station on the target NR cell.

According to a third aspect, an embodiment of this application provides an electronic device. The electronic device includes a processor, a memory, and a program or instructions stored in the memory and executable on the processor, where when the program or the instructions are executed by the processor, steps of the stationing method according to the first aspect are implemented.

According to a fourth aspect, an embodiment of this application provides a readable storage medium. The readable storage medium stores a program or instructions, where when the program or the instructions are executed by a processor, steps of the stationing method according to the first aspect are implemented.

According to a fifth aspect, an embodiment of this application provides a chip. The chip includes a processor and a communication interface, where the communication interface is coupled to the processor, and the processor is configured to run a program or instructions, to implement steps of the stationing method according to the first aspect.

In embodiments of this application, the electronic device receives redirection information sent by the LTE base station based on a measurement report. The redirection information includes a cell frequency. Because the electronic device cannot initiate a registration request on an NSA cell for stationing, the electronic device determines whether to initiate stationing depending on whether a system message of a target NR cell includes TA information, that is, determines, if the TA information is resolved from the system message of the target NR cell, that the target NR cell is an SA cell, and initiates a registration request on the SA cell, so that the electronic device can successfully station on the SA cell, thereby avoiding network connection of the electronic device due to a failure that the electronic device fails to station on the NSA cell.

### BRIEF DESCRIPTION OF THE DRAWINGS

FIG. 1 is a schematic diagram of an example of a stationing scenario according to an embodiment of this application;
FIG. 2 is a schematic diagram of an example of a stationing architecture according to an embodiment of this application;
FIG. 3 is a schematic flowchart of a stationing method according to an embodiment of this application;
FIG. 4 is a schematic flowchart of another stationing method according to an embodiment of this application;
FIG. 5 is a schematic flowchart of still another stationing method according to an embodiment of this application;
FIG. 6 is a schematic flowchart of still another stationing method according to an embodiment of this application;
FIG. 7 is a schematic diagram of a structure of a stationing apparatus according to an embodiment of this application;
FIG. 8 is a schematic diagram of a structure of an electronic device implementing an embodiment of this application; and
FIG. 9 is a schematic diagram of a hardware structure of an electronic device implementing an embodiment of this application.

### DETAILED DESCRIPTION

The following clearly describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

In the specification and claims of this application, terms "first" and "second" are used to distinguish similar objects, but are not used to describe a specific sequence or order. It should be understood that, the data used in this way is exchangeable in a proper case, so that embodiments of this application can be implemented in another order other than those shown or described herein. In addition, objects distinguished by "first" and "second" are usually of one type, and quantities of the objects are not limited. For example, there may be one or more first objects. In addition, "and/or" used in the description and claims represents at least one of connected objects. The character "/" generally indicates an "or" relationship between associated objects.

First, technical terms included in technical solutions provided in embodiments of this application are described.

New radio (New Radio, NR) is a new standard for data communication between a wireless device and a base station.

Radio resource control (Radio Resource Control, RRC), also referred to as radio resource management (Radio Resource Management, RRM) or radio resource allocation (Radio Resource Allocation, RRA), refers to performing management, control, and scheduling on radio resources through specific policies and means, to make full use of limited wireless network resources as much as possible while meeting requirements of quality of service, ensure that a planned coverage area is reached, and improve a service capacity and a resource utilization as much as possible.

Redirected carrier signaling, redirected Carrier Information, is used to instruct a UE to try to station on a specified system/frequency after the UE leaves a connected state. It should be noted that, in this application, Information may be abbreviated as Info.

As stated in BACKGROUND, when moving between networks of different standards, a UE maintains service continuity mainly through handover or redirection operations. Specifically, a handover or redirection mode is used for interoperability between an SA system and an LTE system, a handover mode is used for interoperability between an NSA system and an LTE system, and interoperability is not supported between an SA system and an NSA system. Therefore, a UE on an SA cell needs to fall back to an LTE cell first, then be handed over to an NSA anchor cell, and then, add a secondary cell group (Secondary Cell group, SCG) to station on an NSA cell. However, in an SA/NSA hybrid architecture scenario, when a UE moves from an SA network coverage area to an NSA network coverage area, the UE may fail to station on a network, which causes the UE to lose a network connection.

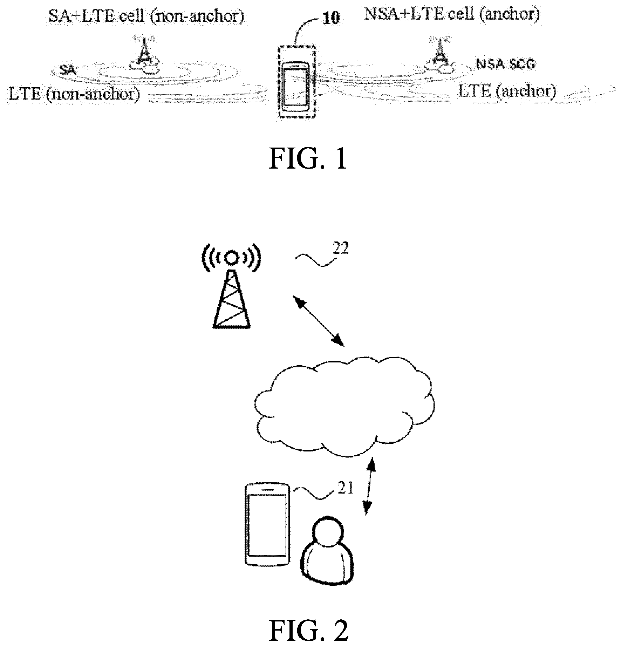

FIG. 1 is a schematic diagram of an example of a stationing scenario according to an embodiment of this application. As shown in FIG. 1, when moving from an SA network coverage area to an NSA network coverage area, a user terminal is located in an SA+NSA overlapping coverage area 10. In this scenario, the UE stations on an LTE (non-anchor) cell, and reports a measurement report of a measured NR cell to an LTE base station after receiving a measurement configuration from the LTE cell. The LTE base station cannot distinguish whether the reported NR cell is an SA cell or an NSA cell, and releases a radio resource control connection (RRC Connection) without exception, to trigger SA redirection. Therefore, if the UE initiates a registration request (Registration Request) on an NSA cell, because the NSA cell does not have tracking area (Tracking Area, TA) information, registration fails, and redirection cannot be implemented. The UE is in an idle (idle) state on both the LTE cell and the NR cell and loses a network connection.

In addition, after a period of time, the UE initiates, on the original LTE cell, stationing. After the stationing is completed, an SA redirection procedure is triggered again, and the UE enters the idle state again and loses the network connection. The foregoing procedure is continuously cycled, which is an infinite loop that the UE frequently enters the idle state and loses the network connection.

To resolve the problems in the related art, an embodiment of this application provides a stationing method. The electronic device receives redirection information sent by the LTE base station based on a measurement report. The redirection information includes a cell frequency. Because the electronic device cannot initiate a registration request on an NSA cell for stationing, the electronic device determines whether to initiate stationing depending on whether a system message of a target NR cell includes TA information, that is, determines, if the TA information is resolved from the system message of the target NR cell, that the target NR cell is an SA cell, and initiates a registration request on the SA cell, so that the electronic device can successfully station on the SA cell, thereby avoiding network connection of the electronic device due to a failure that the electronic device fails to station on the NSA cell, and resolving a problem in the related art that when a UE moves from an SA network coverage area to an NSA network coverage area, the UE fails to station on a network, which causes the UE to lose a network connection.

The stationing method provided in embodiments of this application is described below in detail through specific embodiments and application scenarios thereof with reference to the accompanying drawings.

The stationing method provided in embodiments of this application can be applied to an architecture shown in FIG. 2, and is described in detail with reference to FIG. 2.

FIG. 2 is an architecture diagram of stationing according to an embodiment of this application.

As shown in FIG. 2, the architecture diagram may include an electronic device 21 and an LTE base station 22. The electronic device 21 may be a user equipment UE with a data transmission function such as a mobile phone, a tablet computer, and a smart wearable device. The LTE base station 22 may be an LTE base station corresponding to an LTE cell on which the electronic device 21 currently stations. Communication can be performed between the electronic device 21 and the LTE base station 22.

The stationing method provided in embodiments of this application is described below in detail.

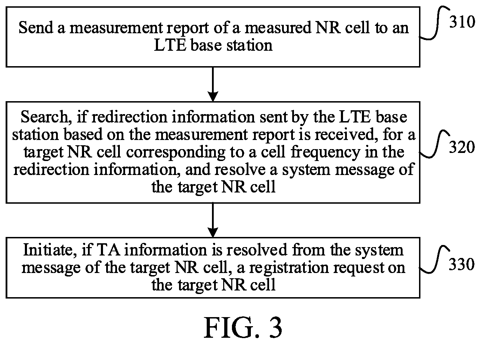

FIG. 3 is a schematic flowchart of a stationing method according to an embodiment of this application. An execution subject of the stationing method may be an electronic device. It should be noted that the foregoing execution subject does not constitute a limitation on this application.

As shown in FIG. 3, the stationing method provided in embodiments of this application may include step 310 to step 330.

Step 310: Send a measurement report of a measured new radio NR cell to a long-term evolution LTE base station.

The LTE base station herein is a base station corresponding to an LTE cell on which the electronic device stations.

Step 320: Search, if redirection information sent by the LTE base station based on the measurement report is received, for a target NR cell corresponding to a cell frequency in the redirection information, and resolve a system message of the target NR cell.

Step 330: Initiate, if tracking area TA information is resolved from the system message of the target NR cell, a registration request on the target NR cell, where the registration request is used for the electronic device to station on the target NR cell.

In the stationing method provided in embodiments of this application, the electronic device receives redirection information sent by the LTE base station based on a measurement report. The redirection information includes a cell frequency. Because the electronic device cannot initiate a registration request on an NSA cell for stationing, the electronic device determines whether to initiate stationing depending on whether a system message of a target NR cell includes TA information, that is, determines, if the TA information is resolved from the system message of the target NR cell, that the target NR cell is an SA cell, and initiates a registration request on the SA cell, so that the electronic device can successfully station on the SA cell, thereby avoiding network connection of the electronic device due to a failure that the electronic device fails to station on the NSA cell, and resolving a problem in the related art that when a UE moves from an SA network coverage area to an NSA network coverage area, the UE fails to station on a network, which causes the UE to lose a network connection.

The foregoing step 310 to step 330 are described below in detail with reference to specific embodiments.

First, step 310 is included: Send a measurement report of a measured new radio NR cell to an LTE base station.

In some embodiments of this application, before step 310, the method may further include the following steps: receiving, if the electronic device stations on an LTE cell, measurement configuration information sent by the LTE base station; and perform NR cell measurement based on the received measurement configuration information, to obtain the measurement report of the NR cell.

In the foregoing embodiment, the measurement report may include cell characteristic information, such as a cell frequency, a PCI, and signal strength, of the NR cell. The cell characteristic information may be parameters required by the electronic device to access the network.

Step 320 is included: Search, if redirection information sent by the LTE base station based on the measurement report is received, for a target NR cell corresponding to a cell frequency in the redirection information, and resolve a system message of the target NR cell.

In some embodiments of this application, the redirection information may be redirected carrier signaling (redirected Carrier Info) in a radio resource control connection release (RRC Connection Release) message, and the redirected carrier signaling is used to instruct the electronic device to try to station on a frequency of the target NR cell after the electronic device leaves a connected state.

In the foregoing embodiments, the method may further include: determining, by the electronic device, whether the radio resource control connection release message from the LTE base station is received, disconnecting the connection to the LTE base station if the radio resource control connection release message is received, searching, at the cell frequency in the redirection information, for the target NR cell, and resolving the system message of the target NR cell.

In some embodiments of this application, the measurement report may include signal strength of the target NR cell, and if there are a plurality of target NR cells corresponding to cell frequencies in the redirection information, the searching for a target NR cell corresponding to a cell frequency in the redirection information may specifically include: searching for the target NR cells in descending order according to signal strength of the target NR cells.

In an example, a device A is located in an LTE cell and is connected to an LTE base station, that is, a base station 1, corresponding to the LTE cell, redirection information sent by the base station 1 to the device A includes a frequency a, a frequency b, a frequency c, and a frequency d, and target NR cells corresponding to frequencies a to d are cells a to d respectively. Since signal strength relationships of the cells a to d previously measured by the device A are cell b>cell c>cell d>cell a, the device A performs a cell search in order of the cell b, the cell c, the cell d, and the cell a, and resolves system messages of the four cells.

In embodiments of this application, the electronic device may perform a target NR cell search based on the signal strength, and preferentially search for a target NR cell with higher signal strength, that is, preferentially select, from all target NR cells on which the electronic device can station, a target NR cell with higher signal strength for stationing, to improve the signal strength and user experience of the network connection.

Step 330 is included: Initiate, if tracking area TA information is resolved from the system message of the target NR cell, a registration request on the target NR cell, where the registration request is used for the electronic device to station on the target NR cell.

In some embodiments of this application, the foregoing registration request may be Registration Request.

In some embodiments of this application, the system message of the SA cell includes a System Information Block Type 1 (System Information Block Type 1, SIB 1), and the SIB1 includes TA information. The NSA cell may include an NSA single-mode cell and an SA/NSA dual-mode cell. The system message of the NSA single-mode cell does not include a SIB 1. If the SA/NSA dual-mode cell switches to an NSA mode, the system message may include a SIB1, but the SIB1 does not include TA information. Therefore, the system message of the SA cell includes TA information, and the system message of the NSA cell does not include TA information. The electronic device may determine a cell type of the target NR cell by determining whether the system message of the target NR cell carries TA information.

In the foregoing embodiment, step 330 may specifically include: determining, if TA information is resolved from the system message of the target NR cell, that a cell type of the target NR cell is SA, and the target NR cell is an SA cell; and determining, if no TA information is resolved from the system message of the target NR cell, that a cell type of the target NR cell is NSA, and the target NR cell is an NSA cell.

In some other embodiments of this application, the electronic device may also determine the cell type of the target NR cell by determining whether the system message of the target NR cell carries a tracking area code (Tracking Area Code, TAC).

In the foregoing embodiment, the method may further include: determining, if a TAC is resolved from the system message of the target NR cell, that a cell type of the target NR cell is SA, and the target NR cell is an SA cell; and determining, if no TAC is resolved from the system message of the target NR cell, that a cell type of the target NR cell is NSA, and the target NR cell is an NSA cell.

In some embodiments of this application, after step 320, the method may further include the following step: sending a connection request to the LTE base station if no TA information is resolved from a system message of any target NR cell, to establish a connection to the LTE base station.

In a specific example, a device A is located in an LTE cell, and is connected to an LTE base station, that is, a base station 1, corresponding to the LTE cell, the base station 1 sends RRC Connection Release to device A, redirected Carrier Info in RRC Connection Release indicates a frequency a, a frequency b, a frequency c, and a frequency d, and target NR cells corresponding to the frequencies a to d are cells a to d respectively. At the same time, the device A disconnects from the base station 1 after receiving the redirection information, searches for the cells a to d, and resolves system messages of the cells a to d. If the device A does not resolve TA information from the system messages of the cells a to d, that is, if the cells a to d are all NSA cells, the device A re-establishes a connection to the base station 1, to avoid a stationing failure caused by stationing on the cells a to d.

In embodiments of this application, if no TA information is resolved from a system message of any target NR cell, that is, if the target NR cells corresponding to the cell frequencies indicated by the LTE base station are all NSA cells, a connection to the LTE base station is re-established, which can avoid the electronic device from losing a network connection due to a registration failure after a registration request is initiated on an NSA cell, maintain the network connection of the electronic device, and improve the quality of the network service.

In some embodiments of this application, step 320 may specifically include: re-executing a service request in the LTE network.

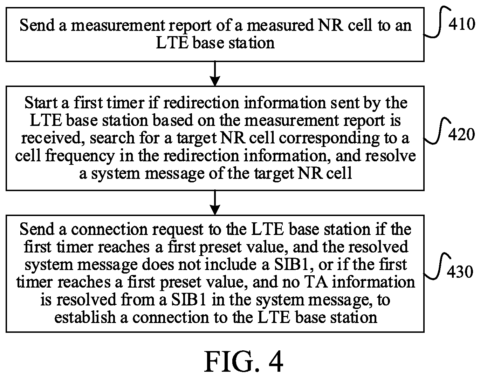

In some embodiments of this application, to reduce duration of network disconnection of a UE, FIG. 4 is a schematic flowchart of a stationing method according to another embodiment of this application. An execution subject of the stationing method may be an electronic device. It should be noted that the foregoing execution subject does not constitute a limitation on this application.

As shown in FIG. 4, the stationing method provided in embodiments of this application may include step 410 to step 430.

Step 410: Send a measurement report of a measured NR cell to an LTE base station.

It should be noted that step 410 herein is the same as the foregoing step 310, and for the sake of brevity, details are not described herein again.

Step 420: Start a first timer if redirection information sent by the LTE base station based on the measurement report is received, search for a target NR cell corresponding to a cell frequency in the redirection information, and resolve a system message of the target NR cell.

Step 430: Send a connection request to the LTE base station if the first timer reaches a first preset value, and the resolved system message does not include a SIB1, or if the first timer reaches a first preset value, and no TA information is resolved from a SIB1 in the system message, to establish a connection to the LTE base station.

If the system message of the target NR cell does not include a SIB 1, the target NR cell is an NSA single-mode cell or an SA/NSA dual-mode cell in an SA mode. If the system message of the target NR cell includes a SIB1, but no TA information is included in the SIB1, the target NR cell is an SA/NSA dual-mode cell in an NSA mode. When the target NR cell is an NSA single-mode cell or an SA/NSA dual-mode cell, the UE cannot initiate a registration request on the target NR cell.

In embodiments of this application, the first timer is started if the redirection information is received. If the system message resolved before the first timer reaches the first preset value does not include a SIB1, or the SIB1 of the system message does not include TA information, it indicates that the resolved system messages are all system messages of NSA cells, that is, no SA cell is found through searching before the first timer reaches the first preset value. In this case, a connection to the original LTE base station may be directly established, to prevent the UE from failing to station on a network for a long time, and effectively reduce duration of network disconnection and traffic interruption of the UE.

It should be noted that the foregoing first preset value may be set according to specific requirements, and is not specifically limited in this application.

Still referring to the foregoing example, the device A receives redirected Carrier Info sent by the base station 1, where redirected Carrier Info indicates the frequency a, the frequency b, the frequency c, and the frequency d, and the first preset value is 2s. If the device A receives redirected Carrier Info sent by the base station 1, the device A disconnects from the base station 1, starts the first timer, searches for the cells a to d, and resolves system messages of the cells a to d. The device A resolves the system messages of the cell a, the cell b, and the cell c before the first timer reaches 2s. No SIB 1 is resolved from the system messages of the cell a and the cell b, and although a SIB1 is resolved from the system message of the cell c, but no TA information is resolved from the SIB1. Therefore, the device A re-establishes a connection to the base station 1 to prevent the device A from failing to station on a network for a long time.

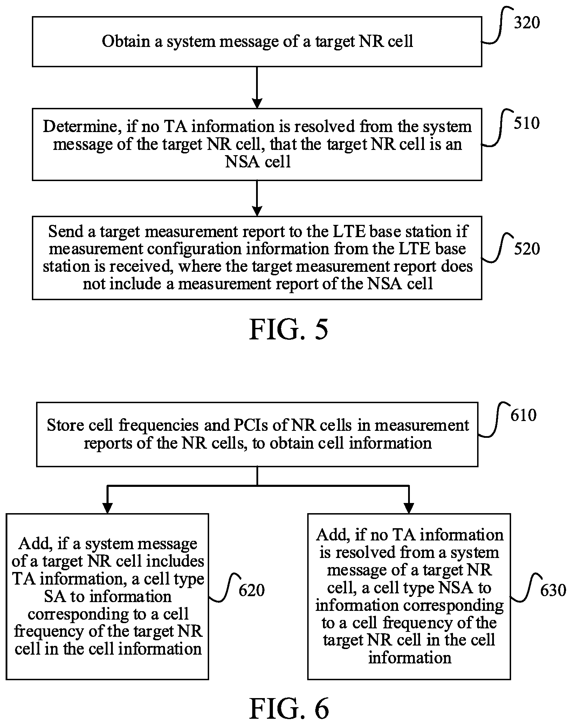

In some embodiments of this application, FIG. 5 is a schematic flowchart of a stationing method according to still another embodiment of this application. An execution subject of the stationing method may be an electronic device. It should be noted that the foregoing execution subject does not constitute a limitation on this application.

As shown in FIG. 5, after the resolving the system message of the target NR cell in step 320, the method may further include the following steps:

Step 510: Determine, if no TA information is resolved from the system message of the target NR cell, that the target NR cell is an NSA cell.

Step 520: Send a target measurement report to the LTE base station if measurement configuration information from the LTE base station is received, where the target measurement report does not include a measurement report of the NSA cell.

In some embodiments of this application, after step 520, the method may further include: receiving target redirection information sent by the LTE base station based on the target measurement report, where the target redirection information does not include a frequency of the NSA cell; and performing stationing based on a cell frequency in the target redirection information.

In embodiments of this application, an NSA cell in the target NR cell is determined, so that the target measurement report can be sent to the LTE base station if the measurement configuration information from the LTE base station is subsequently received again. Since the target measurement report does not include information about the NSA cell, a frequency of the NSA cell may not be included in the redirection information sent by the LTE base station to the UE based on the target measurement report. In this way, when the UE performs stationing based on a frequency in the redirection information, the UE can be prevented from a stationing failure caused by stationing on an NSA cell. In addition, the UE can also be prevented from an infinite loop in which the UE frequently enters an idle state and loses a network connection, so that the network connection of the UE is effectively ensured, and long-time traffic interruption is avoided.

In some embodiments of this application, after it is determined that the target NR cell is an NSA cell, the method may further include adding a physical cell identifier PCI of the NSA cell to a blacklist corresponding to the LTE base station.

The blacklist is used for the electronic device to delete a measurement report of the NSA cell from the measurement report of the NR cell to obtain the target measurement report. Therefore, the target measurement report does not include the measurement report of the NSA cell corresponding to the PCI in the blacklist.

For example, the device A receives redirected Carrier Info sent by the base station 1, where redirected Carrier Info indicates the frequency a, the frequency b, the frequency c, and the frequency d, and target NR cells are cells a to d. If the device A obtains a system message of the cell a and does not resolve TA information in the system message, it is determined that cell a is an NSA cell, and in this case, the device A adds a PCI of the cell a to a blacklist corresponding to the base station 1. In addition, if the measurement configuration information from the base station 1 is received later, a target measurement report excluding the measurement report of the cell 1 is sent to base station 1.

In some embodiments of this application, after the adding a PCI of the NSA cell to a blacklist corresponding to the LTE base station, the method may further include at least one of the following: deleting the PCI of the NSA cell from the blacklist if the PCI of the NSA cell is changed; deleting the PCI of the NSA cell from the blacklist if the electronic device turns on an airplane mode; and starting a second timer when the PCI of the NSA cell is added to the blacklist, and deleting the PCI of the NSA cell from the blacklist if the second timer reaches a second preset value.

It should be noted that the foregoing second preset value may be set according to specific requirements, and is not specifically limited in this application.

For example, the second preset value may be 50s, 60s, or the like.

In embodiments of this application, after the PCI of the NSA cell is added to the blacklist, the PCI of the NSA cell may be removed from the blacklist based on at least one of a change of the PCI, a working mode of the electronic device, and duration of being in the blacklist, to effectively update and optimize the blacklist, so that the blacklist can be adapted to the UE better, and the network use experience of the user can be improved.

In some embodiments of this application, the NR cells may include a target NR cell. FIG. 6 is a schematic flowchart of a stationing method according to still another embodiment of this application. An execution subject of the stationing method may be an electronic device. It should be noted that the foregoing execution subject does not constitute a limitation on this application.

As shown in FIG. 6, the method may include the following steps.

Step 610: Store cell frequencies and PCIs of NR cells in measurement reports of the NR cells, to obtain cell information.

After performing NR cell measurement based on the received measurement configuration information to obtain the measurement reports of the NR cells, the cell frequencies and the PCIs of the NR cells in the measurement reports of the NR cells may be stored, to obtain the cell information.

For example, the cell frequencies and the PCIs of the NR cells may be stored in a form of a list.

In some embodiments of this application, in addition to the cell frequencies and the PCIs of the NR cells, other cell characteristic information, such as signal strength and network operation modes, of the NR cells may also be stored. For the sake of brevity, details are not described herein again.

Step 620: Add, if a system message of a target NR cell includes TA information, a cell type SA to information corresponding to a cell frequency of the target NR cell in the cell information.

In some embodiments of this application, the system message of the target NR cell may be resolved to determine whether the system message includes TA information.

Step 630: Add, if no TA information is resolved from a system message of a target NR cell, a cell type NSA to information corresponding to a cell frequency of the target NR cell in the cell information.

In embodiments of this application, cell frequencies and PCIs of measured NR cells can be stored locally, to obtain cell information, and based on a system message of a target NR cell in the NR cells, a cell type of the target NR cell can be added to the cell information as SA or NSA. In this way, when redirection information including a frequency of the target NR cell is received again, it can be determined directly based on the cell information whether the target NR cell is an SA cell or an NSA cell, and the SA cell is selected for stationing, to improve the speed and efficiency of stationing.

It should be noted that, the stationing method provided in embodiments of this application may be performed by a stationing apparatus, or a control module, configured to perform the stationing method, in the stationing apparatus. In embodiments of this application, the stationing apparatus provided in embodiments of this application is described by using an example in which the stationing apparatus performs the stationing method. The stationing apparatus is described below in detail.

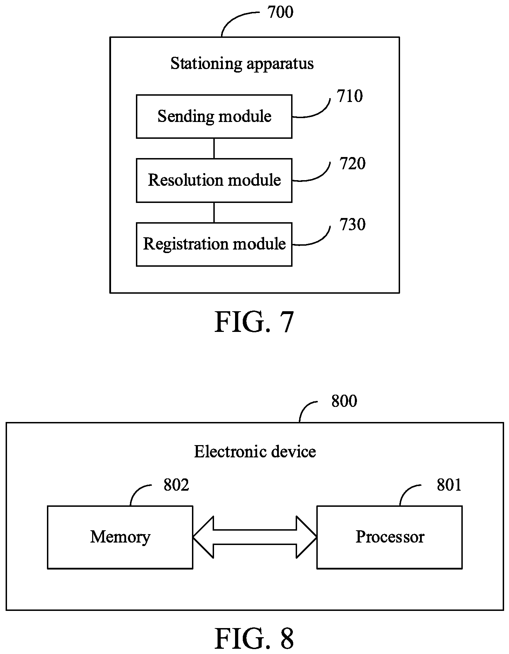

FIG. 7 is a schematic diagram of a structure of a stationing apparatus according to this application.

As shown in FIG. 7, an embodiment of this application provides a stationing apparatus 700, applicable to an electronic device. The stationing apparatus 700 includes: a sending module 710, a resolution module 720, and a registration module 730.

The sending module 710 is configured to send a measurement report of a measured NR cell to an LTE base station. The resolution module 720 is configured to search, if redirection information sent by the LTE base station based on the measurement report is received, for a target NR cell corresponding to a cell frequency in the redirection information, and resolve a system message of the target NR cell. The registration module 730 is configured to initiate, if tracking area TA information is resolved from the system message of the target NR cell, a registration request on the target NR cell, where the registration request is used for an electronic device to station on the target NR cell.

In the stationing apparatus provided in embodiments of this application, the electronic device receives redirection information sent by the LTE base station based on a measurement report. The redirection information includes a cell frequency. Because the electronic device cannot initiate a registration request on an NSA cell for stationing, the electronic device determines whether to initiate stationing depending on whether a system message of a target NR cell includes TA information, that is, determines, if the TA information is resolved from the system message of the target NR cell, that the target NR cell is an SA cell, and initiates a registration request on the SA cell, so that the electronic device can successfully station on the SA cell, thereby avoiding network connection of the electronic device due to a failure that the electronic device fails to station on the NSA cell, and resolving a problem in the related art that when a UE moves from an SA network coverage area to an NSA network coverage area, the UE fails to station on a network, which causes the UE to lose a network connection.

In some embodiments of this application, the measurement report includes signal strength of the target NR cell. The resolution module 720 includes a searching unit, configured to search, if there are a plurality of target NR cells corresponding to cell frequencies in the redirection information, for the target NR cells in descending order according to signal strength of the target NR cells.

In embodiments of this application, the electronic device may perform a target NR cell search based on the signal strength, and preferentially search for a target NR cell with higher signal strength, that is, preferentially select, from all target NR cells on which the electronic device can station, a target NR cell with higher signal strength for stationing, to improve the signal strength and user experience of the network connection.

In some embodiments of this application, the apparatus further includes a starting module, configured to start a first timer if the redirection information is received. The sending module 710 is configured to send a connection request to the LTE base station if the first timer reaches a first preset value, and the system message does not include a SIB 1, or if the first timer reaches a first preset value, and no TA information is resolved from a SIB1 in the system message, to establish a connection to the LTE base station.

In embodiments of this application, the first timer is started if the redirection information is received. If the system message resolved before the first timer reaches the first preset value does not include a SIB1, or the SIB1 of the system message does not include TA information, it indicates that the resolved system messages are all system messages of NSA cells, that is, no SA cell is found through searching before the first timer reaches the first preset value. In this case, a connection to the original LTE base station is directly established, to prevent the UE from failing to station on a network for a long time, and effectively reduce duration of network disconnection and traffic interruption of the UE.

In some embodiments of this application, the sending module 710 is configured to send a connection request to the LTE base station if no TA information is resolved from a system message of any target NR cell, to establish a connection to the LTE base station.

In embodiments of this application, if no TA information is resolved from a system message of any target NR cell, that is, if the target NR cells corresponding to the cell frequencies indicated by the LTE base station are all NSA cells, a connection to the LTE base station is re-established, which can avoid the electronic device from losing a network connection due to a registration failure after a registration request is initiated on an NSA cell, maintain the network connection of the electronic device, and improve the quality of the network service.

In some embodiments of this application, the apparatus further includes a determining module, configured to determine, if no TA information is resolved from the system message of the target NR cell after the system message of the target NR cell is resolved, that the target NR cell is an NSA cell. The sending module 710 is further configured to send a target measurement report to the LTE base station if measurement configuration information from the LTE base station is received, where the target measurement report does not include a measurement report of the NSA cell. In embodiments of this application, an NSA cell in the target NR cell is determined, so that the target measurement report can be sent to the LTE base station if the measurement configuration information from the LTE base station is subsequently received again. Since the target measurement report does not include information about the NSA cell, a frequency of the NSA cell may not be included in the redirection information sent by the LTE base station to the UE based on the target measurement report. In this way, when the UE performs stationing based on a frequency in the redirection information, the UE can be prevented from a stationing failure caused by stationing on an NSA cell. In addition, the UE can also be prevented from an infinite loop in which the UE frequently enters an idle state and loses a network connection, so that the network connection of the UE is effectively ensured, and long-time traffic interruption is avoided.

The stationing apparatus provided in embodiments of this application can implement various processes implemented by the electronic device in the method embodiments of FIG. 3 to FIG. 6.

The stationing apparatus in embodiments of this application may be an apparatus or may be a component, an integrated circuit, or a chip in a terminal. The apparatus may be a mobile electronic device or may be a non-mobile electronic device. For example, the mobile electronic device may be a mobile phone, a tablet computer, a notebook computer, a palm computer, an in-vehicle electronic device, a wearable device, an ultra-mobile personal computer (ultra-mobile personal computer, UMPC), a netbook, or a personal digital assistant (personal digital assistant, PDA); and the non-mobile electronic device may be a server, a network attached storage (Network Attached Storage, NAS), a personal computer (personal computer, PC), a television (television, TV), a teller machine, or an automated machine, which are not specifically limited in embodiments of this application.

The stationing apparatus in embodiments of this application may be an apparatus with an operating system. The operating system may be an Android (Android) operating system, may be an iOS operating system, or may be another possible operating system, and is not specifically limited in embodiments of this application.

Optionally, as shown in FIG. 8, embodiments of this application further provide an electronic device 800, including a processor 801, a memory 802, and a program or instructions stored in the memory 802 and executable on the processor 801. When the program or the instructions are executed by the processor 801, processes of the foregoing embodiments of the stationing method are implemented, and the same technical effects can be achieved. To avoid repetition, details are not described herein again.

It should be noted that the electronic device in embodiments of this application may include the mobile electronic device and the non-mobile electronic device.

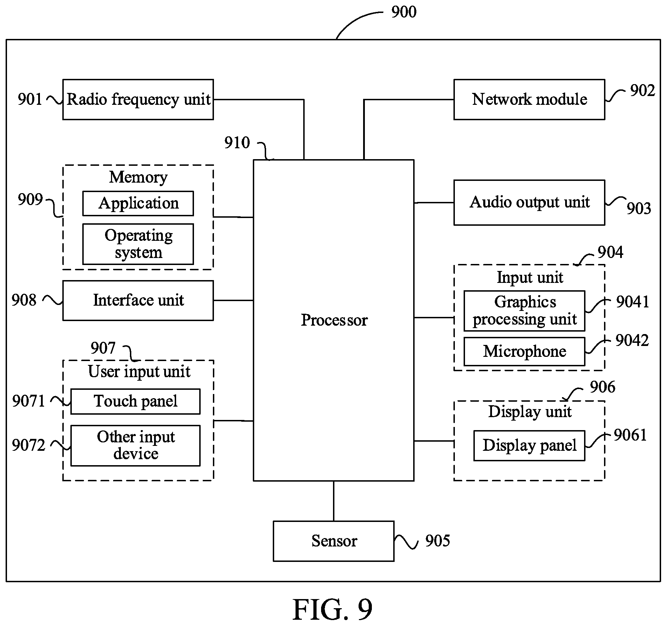

FIG. 9 is a schematic diagram of a hardware structure of an electronic device implementing an embodiment of this application.

The electronic device 900 includes, but is not limited to, components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the electronic device 900 may further include a power supply (such as a battery) for supplying power to the components. The power supply may be logically connected to the processor 910 by a power supply management system, thereby implementing functions, such as charging, discharging, and power consumption management, by using the power supply management system. The structure of the electronic device shown in FIG. 9 constitutes no limitation on the electronic device, and the electronic device may include more or fewer components than those shown in the figure, or some components may be combined, or a different component deployment may be used. Details are not described herein again.

The network module 902 is configured to send a measurement report of a measured NR cell to an LTE base station. The processor 910 is configured to search, if redirection information sent by the LTE base station based on the measurement report is received, for a target NR cell corresponding to a cell frequency in the redirection information, and resolve a system message of the target NR cell. The network module 902 is configured to initiate, if tracking area TA information is resolved from the system message of the target NR cell, a registration request on the target NR cell, where the registration request is used for an electronic device to station on the target NR cell.

In embodiments of this application, the electronic device receives redirection information sent by the LTE base station based on a measurement report. The redirection information includes a cell frequency. Because the electronic device cannot initiate a registration request on an NSA cell for stationing, the electronic device determines whether to initiate stationing depending on whether a system message of a target NR cell includes TA information, that is, determines, if the TA information is resolved from the system message of the target NR cell, that the target NR cell is an SA cell, and initiates a registration request on the SA cell, so that the electronic device can successfully station on the SA cell, thereby avoiding network connection of the electronic device due to a failure that the electronic device fails to station on the NSA cell, and resolving a problem in the related art that when a UE moves from an SA network coverage area to an NSA network coverage area, the UE fails to station on a network, which causes the UE to lose a network connection.

In some embodiments of this application, the measurement report includes signal strength of the target NR cell. The processor 910 is further configured to search, if there are a plurality of target NR cells corresponding to cell frequencies in the redirection information, for the target NR cells in descending order according to signal strength of the target NR cells.

In embodiments of this application, the electronic device may perform a target NR cell search based on the signal strength, and preferentially search for a target NR cell with higher signal strength, that is, preferentially select, from all target NR cells on which the electronic device can station, a target NR cell with higher signal strength for stationing, to improve the signal strength and user experience of the network connection.

In some embodiments of this application, the processor 910 is further configured to start a first timer if the redirection information is received. The network module 902 is configured to send a connection request to the LTE base station if the first timer reaches a first preset value, and the system message does not include a SIB1, or if the first timer reaches a first preset value, and no TA information is resolved from a SIB1 in the system message, to establish a connection to the LTE base station.

In embodiments of this application, the first timer is started if the redirection information is received. If the system message resolved before the first timer reaches the first preset value does not include a SIB1, or the SIB1 of the system message does not include TA information, it indicates that the resolved system messages are all system messages of NSA cells, that is, no SA cell is found through searching before the first timer reaches the first preset value. In this case, a connection to the original LTE base station is directly established, to prevent the UE from failing to station on a network for a long time, and effectively reduce duration of network disconnection and traffic interruption of the UE.

In some embodiments of this application, the network module 902 is further configured to send a connection request to the LTE base station if no TA information is resolved from a system message of any target NR cell, to establish a connection to the LTE base station.

In embodiments of this application, if no TA information is resolved from a system message of any target NR cell, that is, if the target NR cells corresponding to the cell frequencies indicated by the LTE base station are all NSA cells, a connection to the LTE base station is re-established, which can avoid the electronic device from losing a network connection due to a registration failure after a registration request is initiated on an NSA cell, maintain the network connection of the electronic device, and improve the quality of the network service.

In some embodiments of this application, the processor 910 is further configured to determine, if no TA information is resolved from the system message of the target NR cell after the system message of the target NR cell is resolved, that the target NR cell is an NSA cell. The network module 902 is further configured to send a target measurement report to the LTE base station if measurement configuration information from the LTE base station is received, where the target measurement report does not include a measurement report of the NSA cell.

In embodiments of this application, an NSA cell in the target NR cell is determined, so that the target measurement report can be sent to the LTE base station if the measurement configuration information from the LTE base station is subsequently received again. Since the target measurement report does not include information about the NSA cell, a frequency of the NSA cell may not be included in the redirection information sent by the LTE base station to the UE based on the target measurement report. In this way, when the UE performs stationing based on a frequency in the redirection information, the UE can be prevented from a stationing failure caused by stationing on an NSA cell. In addition, the UE can also be prevented from an infinite loop in which the UE frequently enters an idle state and loses a network connection, so that the network connection of the UE is effectively ensured, and long-time traffic interruption is avoided.

It should be understood that, in embodiments of this application, the input unit 904 may include a graphics processing unit (Graphics Processing Unit, GPU) 9041 and a microphone 9042. The graphics processing unit 9041 processes image data of a static picture or a video obtained by an image capturing apparatus (for example, a camera) in a video capturing mode or an image capturing mode. The display unit 906 may include a display panel 9061, and the display panel 9061 may be configured in a form such as a liquid crystal display or an organic light-emitting diode. The user input unit 907 includes a touch panel 9071 and another input device 9072. The touch panel 9071 is also referred to as a touchscreen. The touch panel 9071 may include two parts: a touch monitoring apparatus and a touch controller. The another input device 9072 may include, but not limited to, a physical keyboard, a functional key (such as a volume control key or a switch key), a track ball, a mouse, and a joystick, which is not described herein in detail. The memory 909 may be configured to store a software program and various data, including, but not limited to, an application program and an operating system. The processor 910 may integrate an application processor and a modem processor. The application processor mainly processes an operating system, a user interface, an application program, and the like. The modem processor mainly processes wireless communication. It may be understood that the modulation and demodulation processor may not be integrated into the processor 910.

Embodiments of this application further provide a readable storage medium. The readable storage medium stores a program or instructions. The program or instructions, when executed by a processor, implement the processes of the foregoing embodiments of the stationing method and can achieve the same technical effects. To avoid repetition, details are not described herein again.

The processor is a processor in the electronic device in the foregoing embodiments. The readable storage medium includes a computer-readable storage medium. An example of the computer-readable storage medium includes a non-transient computer-readable storage medium such as a computer read-only memory (Read-Only Memory, ROM), a random access memory (Random Access Memory, RAM), a magnetic disk, or an optical disc.

Embodiments of this application further provide a chip, including a processor and a communication interface, where the communication interface is coupled to the processor, and the processor is configured to run a program or instructions to implement processes of the embodiments of the stationing method, and can achieve the same technical effects. To avoid repetition, details are not described herein again.

It should be noted that, the chip mentioned in embodiments of this application may also be referred to as a system-level chip, a system chip, a chip system, a system on chip, or the like.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by a sentence "including one" does not exclude that there are still other same elements in the process, method, object, or apparatus. Besides, it should be noted that ranges of the method and apparatus in the implementations of this application are not limited to implementing functions in an order shown or discussed, but may include implementing functions according to the included functions in a substantially simultaneous manner or in a reverse order, for example, the described method may be performed in an order different than the described order. In addition, various steps may also be added, omitted, or combined. In addition, features described with reference to some examples may also be combined in other examples.

Through the descriptions of the foregoing implementations, a person skilled in the art may clearly understand that the method according to the foregoing embodiments may be implemented through software and a necessary general hardware platform, and certainly, may also be implemented by hardware, but in many cases, the former manner is a better implementation. Based on such an understanding, the technical solutions of this application essentially, or the part contributing to the prior art, may be presented in the form of a computer software product. The computer software product is stored in a storage medium (for example, a ROM/RAM, a magnetic disk, or an optical disc) including several instructions to enable a terminal (which may be a mobile phone, a computer, a server, a network device, or the like) to perform the methods described in embodiments of this application.

Although embodiments of this application have been described above with reference to the accompanying drawings, this application is not limited to the specific embodiments described above, and the specific embodiments described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A stationing method, applicable to an electronic device, comprising:
sending a measurement report of a measured new radio NR cell to a long-term evolution LTE base station;
searching, if redirection information sent by the LTE base station based on the measurement report is received, for a target NR cell corresponding to a cell frequency in the redirection information, and resolving a system message of the target NR cell; and
initiating, if tracking area TA information is resolved from the system message of the target NR cell, a registration request on the target NR cell, wherein the registration request is used for the electronic device to station on the target NR cell.

2. The method according to claim 1, wherein the measurement report comprises signal strength of the target NR cell, and if there are a plurality of target NR cells corresponding to cell frequencies in the redirection information, the searching for a target NR cell corresponding to a cell frequency in the redirection information comprises:
searching for the target NR cells in descending order according to signal strength of the target NR cells.

3. The method according to claim 1, wherein the method further comprises:
starting a first timer if the redirection information is received; and
sending a connection request to the LTE base station if the first timer reaches a first preset value, and the resolved system message does not comprise a System Information Block Type 1 SIB 1, or if the first timer reaches a first preset value, and no TA information is resolved from a SIB1 in the system message, to establish a connection to the LTE base station.

4. The method according to claim 1, wherein the method further comprises:
sending a connection request to the LTE base station if no TA information is resolved from a system message of any target NR cell, to establish a connection to the LTE base station.

5. The method according to any one of claims 1 to 4, wherein after the resolving a system message of the target NR cell, the method further comprises:
determining, if no TA information is resolved from the system message of the target NR cell, that the target NR cell is an NSA cell; and
sending a target measurement report to the LTE base station if measurement configuration information from the LTE base station is received, wherein the target measurement report does not comprise a measurement report of the NSA cell.

6. A stationing apparatus, applicable to an electronic device, comprising:
a sending module, configured to send a measurement report of a measured NR cell to an LTE base station;
a resolution module, configured to search, if redirection information sent by the LTE base station based on the measurement report is received, for a target NR cell corresponding to a cell frequency in the redirection information, and resolve a system message of the target NR cell; and
a registration module, configured to initiate, if tracking area TA information is resolved from the system message of the target NR cell, a registration request on the target NR cell, wherein the registration request is used for the electronic device to station on the target NR cell.

7. The apparatus according to claim 6, wherein the measurement report comprises signal strength of the target NR cell, and the resolution module comprises:
a searching unit, configured to search, if there are a plurality of target NR cells corresponding to cell frequencies in the redirection information, for the target NR cells in descending order according to signal strength of the target NR cells.

8. The apparatus according to claim 6, wherein the apparatus further comprises:
a starting module, configured to start a first timer if the redirection information is received, wherein
the sending module is configured to send a connection request to the LTE base station if the first timer reaches a first preset value, and the resolved system message does not comprise a SIB1, or if the first timer reaches a first preset value, and no TA information is resolved from a SIB1 in the system message, to establish a connection to the LTE base station.

9. The apparatus according to claim 6, wherein:
the sending module is configured to send a connection request to the LTE base station if no TA information is resolved from a system message of any target NR cell, to establish a connection to the LTE base station.

10. The apparatus according to any one of claims 6 to 9, wherein the apparatus further comprises:
a determining module, configured to determine, if no TA information is resolved from the system message of the target NR cell after the system message of the target NR cell is resolved, that the target NR cell is an NSA cell, wherein
the sending module is further configured to send a target measurement report to the LTE base station if measurement configuration information from the LTE base station is received, wherein the target measurement report does not comprise a measurement report of the NSA cell.

11. An electronic device, comprising a processor, a memory, and a program or instructions stored in the memory and executable on the processor, wherein when the program or the instructions are executed by the processor, steps of the stationing method according to any one of claims 1 to 5 are implemented.

12. A readable storage medium, storing a program or instructions, wherein when the program or the instructions are executed by a processor, steps of the stationing method according to any one of claims 1 to 5 are implemented.

13. A computer program product, stored in a non-volatile storage medium, wherein when the computer program product is executed by at least one processor, steps of the stationing method according to any one of claims 1 to 5 are implemented.

14. A chip, comprising a processor and a communication interface, wherein the communication interface is coupled to the processor, and the processor is configured to run a program or instructions, to implement steps of the stationing method according to any one of claims 1 to 5.

15. An electronic device, configured to perform steps of the stationing method according to any one of claims 1 to 5.
